# EUROPEAN PATENT SPECIFICATION

(11) **EP 4 420 830 B1**
(45) Date of publication and mention of the grant of the patent: **06.05.2026**
(21) Application number: 23158279.2
(22) Date of filing: 23.02.2023
(51) Int. Cl.: B23Q 17/09, G05B 23/02

(54) **IN-LINE CHARACTERIZATION OF DETERIORATION OF A CUTTING TOOL BASED ON THERMOELECTRIC MEASUREMENT**
INLINE-CHARAKTERISIERUNG DER VERSCHLECHTERUNG EINES SCHNEIDWERKZEUGS AUF BASIS VON THERMOELEKTRISCHER MESSUNG
CARACTÉRISATION EN LIGNE DE LA DÉTÉRIORATION D'UN OUTIL DE COUPE SUR LA BASE D'UNE MESURE THERMOÉLECTRIQUE

(43) Date of publication of application: 28.08.2024
(73) Proprietor: Technische Universität München, in Vertretung des Freistaats Bayern, 80333 München (DE)
(72) Inventor: Welm, Markus, 87534 Oberstaufen (DE); Tröber, Philipp, 85301 Schweitenkirchen (DE); Schrepfer, Agnes, 82399 Raisting (DE)
(74) Representative: Lucke, Andreas

(56) References cited:
- JP-A- S5 639 852
- US-A- 4 694 686
- US-A- 4 786 220

## Description

### FIELD OF THE INVENTION

The present invention is in the field of cutting tools. In particular, the invention refers to a detection module and a method for characterising a deterioration or wear of a cutting tool and to a corresponding cutting tool.

### BACKGROUND OF THE INVENTION

Cutting processes are of widespread use in the industry and their relevance tends to increase presently due to their suitability for the mass production of workpieces, in particular metallic workpieces, in a cost-efficient manner, for example of steel, titanium, magnesium or aluminum. One of the most common techniques for cutting a workpiece is shearing, also known as die cutting, where a material blank is cut by a press using a movable part of a die, a so-called punch, or a moving blade against a fixed part of the die or a fixed blade. Thereby, the material blank is cut according to a pattern determined by the die to form a workpiece with a desired shape.

Current processes for ensuring quality requirements in a cutting process are typically based on a posteriori testing of the cutting tool and/or the workpieces cut therewith. Existing possibilities for in-line supervision in real time are very limited and highly demanding, requiring for example the use of complex optical monitoring systems.

Therefore, most current quality monitoring systems focus on detecting a deterioration of the cutting tool by detecting an increase in a number of defective workpieces after production. Severe deterioration may be preventively countered by carrying out maintenance and reparation tasks on the cutting tool well before a state critical for given quality requirements is reached, this preventive serving of the cutting tool resulting in increased production costs.

Therefore, there is room for technical improvement in the field of detection of deterioration of a cutting tool.

WO 2022/049719 A1 discloses a cutting tool comprising a determination unit configured for determining a state of the blades of the cutting tool based on a voltage waveform when using the blades for a cutting process. However, this determination unit is not able to discriminate between different types of deterioration of the cutting tool.

Techniques for detecting a state of excessive deterioration or near-failure state in a drilling tool based on electrical measurements are known from US 4 694 686 A and US 4 786 220 A. A technique for detecting deterioration in a similar drilling tool based on electrical measurements is described in JP S56 39852 A. However, none of the techniques described in these documents comprises detecting a type of the deterioration suffered by a tool based on an electrical measurement.

### SUMMARY OF THE INVENTION

The present invention aims at providing a solution to the previously mentioned disadvantages of the prior art by providing a device and a method allowing to reliably detect and characterise a deterioration or wear of a cutting tool in-line and in real time. A solution to this problem is provided by a detection module according to claim 1, by a cutting tool according to claim 9 and by a method according to claim 10. Preferred embodiments of the invention are defined in the dependent claims.

A first aspect of the invention refers to a detection module for characterising a deterioration of a cutting tool. A cutting tool may refer herein to a shearing tool, a punch tool and/or a stamping tool, which may in any case be configured as a press. The detection module may be configured for characterising a deterioration of a part of a cutting tool, in particular of a punch tool or die of the cutting tool. Cutting may refer herein to cutting processes in general, including deformation and mass separation, aimed at cutting one or more workpieces from a material blank.

The detection module may be hardware-based and/or software-based. For example, the detection module may be or may comprise a processing unit or an executable code executable by a dedicated processing unit or by a general propose processing unit, for example by a computer.

"Characterising" as used herein for the detection module according to the invention, may refer to the association of measured data to a predefined category. In this sense, "characterising" may further involve generating computer-readable information and/or human-readable information encoding the predefined category to which the measured data has been assigned. In other words, characterising a deterioration of a cutting tool by the detection module according to the invention may comprise generating an output including information about the presence and type of deterioration of the cutting tool.

The detection module comprises an electric sensor, a measuring unit, and a detection unit. The electric sensor is configured for measuring an electric parameter of an electric current flowing between a die of the cutting tool and a material blank during a cutting process for cutting the material blank by the cutting tool using the die. The die refers herein to the part of the cutting tool that contacts the material blank being cut. The "electric parameter" may refer herein to any measurable property or parameter of an electric current allowing to characterise the electric current. The electric parameter may in particular correspond to an electric current intensity (measurable in amperes (A) or in related submultiple units) and/or to an electric voltage (measurable in Volt (V) or in related submultiple units) and/or to a related electric parameter. The electric current flows between the die, possibly between a part thereof far away from the material blank and/or having a substantially constant temperature during a cutting process, and the material blank.

The die of the cutting tool and the material blank being cut may in particular comprise or be made of a respective electrically conductive material, in particular of a metal or a metallic material. For each cutting process involving an electrically conductive die of the cutting tool and an electrically conductive material blank, deformations of the material blank, in particular plastic deformations that precede a final cutting of the material blank, result in localised temperature increases that lead to the creation of a thermoelectric current due to the Seebeck effect, since the die and the material blank have different Seebeck coefficients, for example due to their different material compositions. This effect was explained in detail within the context of a metal forming tool in EP 4 122 619 A1. Such thermoelectric current can be detected during a cutting process by the electric sensor. Thus, the electric parameter measured by the electric sensor is in particular a parameter of a thermoelectric current. For this purpose, the electric sensor may be electrically coupled to the die and to a material blank being cut by the cutting tool by appropriate electrically conducting coupling means, such as cables, electrical connectors and the like. The electric sensor may be or may comprise an amperemeter and/or a voltmeter.

The electric sensor may be electrically connected to the die of the cutting tool at a connection point kept at a constant temperature. Notably, while the principles of the present invention build upon the use of the Seebeck effect and of thermocurrents, it is not necessary, for the purposes of the present invention, to obtain knowledge about absolute values of temperatures within the material blank and/or of any involved Seebeck coefficients.

The measuring unit is configured for determining a first time evolution of a first electric parameter measured by the electric sensor. The first time evolution may be determined over a first monitoring time interval. The measuring unit may be or may be implemented by a dedicated processing unit or may be contained in a module of a processing unit being or implementing the detection module. Since the first electric parameter was measured by the electric sensor during a cutting process for cutting a material blank, the first monitoring time interval corresponds to a time during which a cutting process is being or was performed on the material blank by the cutting tool, in particular including a time during which the die of the cutting tool was in contact with the material blank and exerted pressure thereon. For determining the first time evolution and other similar time evolutions, the measuring unit may comprise a clock unit providing a time reference for the electric parameter measurements provided by the electric sensor. The first time evolution may be determined in real time, i.e. concurrently with the measuring of the first electric parameter.

The first time evolution may correspond to a time-ordered series of values of the electric parameter (e.g. of electric current intensity values measurable in amperes or in related submultiple units and/or of related values like electric voltage values measurable in volt or in related submultiple units), in particular corresponding to the first monitoring time interval covering an entire cutting process or a part thereof, for example from a time at which the cutting tool starts exerting pressure upon the material blank until a time at which the portion of the material blank is cut off and separated from the rest of the material blank. For example, the first time evolution may be a time-ordered series of discrete values of electric current intensity (measured in milliamperes) over a monitoring time interval of e.g. 0.6 seconds, with a time definition delta between successive electric current intensity values of 1 ms. The monitoring time interval may be adapted to a time interval over which the die, in particular the punch, is moving during a cutting process, possibly using correspondingly configured movement sensors and/or contact sensors. The first time evolution, and any other similar time evolution, may hence be represented as a plot line with a vertical axis corresponding for example to electric current intensity, for example from -5 mA to 0 mA or from 0 mA to 5 mA (depending on how a positive or negative electric current intensity is defined), and a horizontal axis corresponding to time, for example from 0 seconds to 0.6 seconds, depending on the duration of the monitoring time interval and/or of the cutting process being monitored.

The detection unit is configured for detecting a type of deterioration of the die of the cutting tool and/or of said material blank based on the first time evolution and on one or more reference time evolutions. The detection unit may be or may be implemented by a dedicated processing unit or may be contained in a module of a processing unit being or implementing the detection module. The detection unit relies on the first time evolution, for example on a time-ordered series of values of electric current intensity measured by the electric sensor through the die and the material blank for a given cutting process, to characterise a type of deterioration of the die. For this purpose, the detection unit compares the first time evolution with one or more reference time evolutions, which may in particular be previously registered time evolutions corresponding to previous cutting processes performed by the cutting tool.

In other words, the operation of the detection unit of the detection module according to the present invention is based on the realisation by the present inventors that deviations of the first time evolution with respect to the one or more reference time evolutions may be indicative, not only of the presence of deterioration in the die, but also of the type of deterioration. For example, the detection unit may be configured for detecting that a detected deterioration corresponds to one or more of an abrasive deterioration, an adhesive deterioration, a breakout deterioration of the die and a deterioration causing a shifting of a burnish zone limit of workpieces cut using the cutting tool.

A deterioration of the die may refer herein, in particular, to a deterioration or wear of a male part of the die, for example of a punch of the cutting tool that applies pressure to the material blank being cut against a female part of the die. Accordingly, the electric sensor may measure the electric parameter of the electric current flowing between the punch of the cutting tool and the material blank being cut. However, additionally or alternatively, a deterioration may refer herein to a deterioration of a female part of the die and the electric sensor may correspondingly measure the electric parameter of an electric current flowing between the female part of the die of the cutting tool and the material blank being cut.

An abrasive deterioration may refer herein to a type of deterioration in which the die has lost part of the original material it was made of, in particular at a side edge of the punch, which may determine a contour of a workpiece being cut, for example an outer contour of the workpiece being cut. As a consequence, a die suffering from abrasive deterioration may have a smaller mass as compared to the original configuration of said die. An abrasive deterioration may for example manifest as an increase in a radius that characterises a rounded edge of the punch of the cutting tool as a deviation from a well-defined sharp edge. This may result in workpieces being cut by the cutting tool with less spatial definition and hence with inferior quality as compared to workpieces formed with a die having a well-defined sharp edge of the punch. For example, a punch with an edge characterised by a radius of 50 µm may provide better workpiece quality and definition than the same punch having a deteriorated edge that is now characterised by a radius of 300 µm.

An adhesive deterioration may refer herein to a type of deterioration in which material that was not included in the original material composition of the die, so-called "galling", is attached to the contact surface thereof. As a consequence, a die suffering from adhesive deterioration may have a greater mass as compared to the original configuration of said die. The temperature increases undergone during the cutting process by the die and the material blank may cause threshold shear stresses to be exceeded in localised areas of the respective materials and surface diffusion leading to mass transfer. This in turn may create microscale weld deposits and micro-welds due to rapid heating and cooling. This may result in workpieces being cut by the cutting tool with inferior quality as compared to workpieces formed with a die free of adhesive deterioration.

A breakout deterioration may refer herein to a type of deterioration in which a portion of the original material composition and shape of the die is missing after being torn away due to thermal and mechanical strain during the cutting process. A breakout deterioration may hence correspond to a surface indentation of the die of the cutting tool, in particular of the punch, for example at a side edge of the punch that determines the outer contour of a workpiece/material blank being cut. This may result in workpieces being cut by the cutting tool with inferior quality as compared to workpieces formed with a die free of breakout deterioration.

A shifting of a burnish zone limit of the workpiece may refer herein to a change in the position along the depth of a workpiece cut with the cutting tool at which an interface or limit between a plastic deformation zone (the burnished zone) and a fractured zone is located. Due to material inhomogeneities and irregularities and depending on a clearance between the male and female part of the die, the shearing action of the cutting tool may not occur uniformly throughout the thickness of the material blank. Therefore, in a sheared workpiece, two distinct sections can generally be seen: The plastic deformation zone (the burnished zone), corresponding to a region in which the material blank was plastically deformed by the die, which generally has a smooth edge surface, and the fractured zone, corresponding to a region in which the material blank fractured, which generally has a rough edge surface. As deterioration of the die of the cutting tool increases, for example due to abrasive deterioration of the edge of the male part of the die (e.g. the punch), a portion of the thickness of the resulting workpiece corresponding to the burnished zone may increase, for example from 28% without deterioration to 69% with advanced deterioration.

The present invention allows using the cutting tool and a material blank being cut by the cutting tool as in-line measuring equipment allowing to determine a type of deterioration of the die of the cutting tool. This may allow correctly determining a type of deterioration of the cutting tool and implementing a repair or replacement protocol according to corresponding predefined tolerances. Notably, different tolerances may be defined with respect to different types of deterioration. For example, a first tolerance criterion may apply to abrasive deterioration while a second tolerance criterion, different from the first tolerance criterion, may apply to breakout deterioration or to a deterioration related to a shifting of a burnish zone limit in a workpiece manufactured using the cutting tool. Notably, the detection module of the present invention may be incorporated without complexity in existing cutting tools.

As previously mentioned, it is not necessary, for the purposes of the present invention, to obtain knowledge about absolute values of temperatures within the material blank. All necessary information on the existing type of deterioration can be obtained, according to the invention, from the first time evolution and the one or more reference time evolutions.

According to preferred embodiments of the invention, the measuring unit may further be configured for determining, before determining the first time evolution, the one or more reference time evolutions for one or more corresponding reference electric parameters of corresponding reference electric currents measured by the electric sensor during respective one or more cutting processes for cutting a respective material blank by the cutting tool using the die. Thus, a sequence of reference time evolutions, possibly comprising one, two or more reference time evolutions, may be determined for a corresponding sequence of reference electric currents, of which a respective reference electric parameter is measured for respective reference cutting processes. In such embodiments, the detection unit may be configured for detecting said type of deterioration of the die of the cutting tool based on a comparison of the first time evolution with the at least one reference time evolution. The one or more reference time evolutions may hence act as a reference or calibration for determining, from the first time evolution, what type of deterioration the die of the cutting tool is suffering.

The reference cutting processes may in particular be cutting processes performed using the same cutting tool and for manufacturing the same type of workpiece, possibly using the same type material blank or even the same material blank. In other words, the one or more reference time evolutions, which may for example be stored in a storage unit connected to the detection unit, may allow comparing the first time evolution characterising a present cutting process with reference time evolutions characterising similar or identical previously performed cutting processes. Therefore, deviations between the first time evolutions and the reference time evolutions may be due to differences between a current state of the cutting tool and previous states of the cutting tool, which may be caused by deterioration or wear.

In preferred embodiments of the invention, the detection unit may be configured for detecting said type of deterioration of the die based on time derivatives of the first time evolution and of the one or more reference time evolutions. "Time derivate" may refer herein to a first derivative function with respect to the time variable. In particular, the detection unit may be configured for comparing the time derivative of the first time evolution with the time derivative of at least one of the one or more reference time evolutions, possibly of some or all of them. Such time derivatives may be related to rates of increase or decrease per unit of time of the corresponding electric currents flowing between the die and the material blank, which may be correlated with corresponding rates of temperature increase or decrease within the cutting tool, in particular in a contact region at which the material blank and the die are in mutual contact during the cutting process. The idea behind the use of time derivatives for characterising the deterioration of the cutting tool is that different types of deterioration may have different impacts on the way in which temperature increases within the material blank during the cutting process and these may be reflected by the corresponding time evolutions.

For example, in some embodiments, the detection unit may be configured for determining that said type of deterioration corresponds to an abrasive deterioration of the die if the time derivative of the first time evolution has greater absolute value than a time derivative of the one or more reference time evolutions. Greater absolute value may refer herein to an absolute value being greater at least by a predefined absolute or relative difference, for example by at least 10%, 20%, or 30%. An abrasive deterioration, for example an increase in the curvature radius characterising the cutting edge of the die of the cutting tool, may cause a greater plastic deformation of the material blank during the cutting process and hence more pronounced variations in temperature, which are reflected by greater slopes (in absolute terms) of the corresponding time evolution of the thermoelectric current measured by the electric sensor. Thus, the presence of greater slopes, i.e. time derivatives with greater absolute value, can be used within the context of the present invention as an indicator of abrasive deterioration of the cutting tool.

If for example a succession of cutting processes for manufacturing a sequence of one and the same type of workpiece is monitored using the detection module of the invention and the die is undergoing an increasing degree of abrasive deterioration, the slope (first time derivative) of the corresponding time evolution may be observed to progressively increase as deterioration increases.

As a further example, in some embodiments, the detection unit may be configured for determining that said type of deterioration corresponds to a breakout deterioration of the die if the time derivative of the first time evolution has smaller absolute value than a time derivative of the one or more reference time evolutions. Smaller absolute value may refer herein to an absolute value being smaller at least by a predefined absolute or relative difference, for example by at least 10%, 20%, or 30%. The presence of a breakout or indentation in the die, in particular in the punch of the cutting tool, may lead to an overall reduced plastic deformation of the material blank during the cutting process, because the material blank is formed to a lesser degree in the part of the die in which original material is missing. As a consequence, the presence of the breakout may cause a smaller temperature variation within the material blank and, consequently, smaller variation rates in the corresponding time evolution of the thermoelectric current measured by the electric sensor. Thus, the presence of smaller slopes, i.e. time derivatives with smaller absolute value, can be used within the context of the present invention as an indicator of breakout deterioration of the cutting tool.

If for example a succession of cutting processes for manufacturing a sequence of workpieces is monitored using the detection module of the invention and the die suffers a breakout, a sudden decrease in the slope (first time derivative) of the corresponding time evolution may be observed. "Sudden" may refer herein to an abrupt difference between one cutting process and the next cutting process in the sequence.

In preferred embodiments of the invention, the detection unit may be configured for detecting said type of deterioration of the die based on absolute values of the first time evolution and of the one or more reference time evolutions. In particular, the detection unit may be configured for comparing the absolute value of the first time evolution with the absolute value of at least one of the one or more reference time evolutions, possibly of some or all of them. Such absolute values may be related to maximal absolute values of the electric parameters of the corresponding electric currents flowing between the die and the material blank, which may be correlated with corresponding maximal absolute values of temperature within the material blank during the cutting process caused by maximal degrees of plastic deformation. The idea behind the use of absolute values for characterising the deterioration of the cutting tool is that different types of deterioration may have different impacts on the maximal levels of temperature and deformation undergone by the material blank during the cutting process and these may be reflected by the corresponding time evolutions.

For example, in some embodiments, the detection unit may be configured for determining that said type of deterioration corresponds to an adhesive deterioration of the die if an absolute value of the first time evolution has a greater maximum than an absolute value of the one or more reference time evolutions. Greater absolute value may refer herein to an absolute value being greater at least by a predefined absolute or relative difference, for example by at least 10%, 20%, or 30%. Preferably, an adhesive deterioration may be detected with the proviso that an absolute value of the time derivative of the first time evolution does not differ from an absolute value of the time derivative of the one or more reference time evolution by more than a predefined threshold, for example by not more than 30%, 40% or 50%, in particular in a time preceding a first local extreme. An adhesive deterioration of the die, in particular of the punch of the cutting tool, may lead to a plastic deformation of the material blank during the cutting process that may be similar, even very similar, to the plastic deformation undergone in the absence of the adhesive deterioration. However the adhesive deterioration, which may be in the form of microscale weld deposits and/or micro-welds, may cause localised increased thermal activity leading to an overall greater temperature being reached within the material blank as compared to a situation in the absence of the adhesive deterioration. As a result, an absolute value maximum of the thermal current measured by the electric sensor may vary, in particular increase, with respect to the situation in the absence of the adhesive deterioration.

If for example a succession of cutting processes for manufacturing a sequence of one and the same type of workpiece is monitored using the detection module of the invention and the die is undergoing an increasing degree of adhesive deterioration, the absolute value or amplitude of the maximum of the corresponding time evolution may be observed to progressively increase as deterioration increases, while the absolute value of the time derivative may hardly change or vary only slightly.

In preferred embodiments of the invention, the detection unit may be configured for determining that said type of deterioration corresponds to a deterioration causing a shifting of the burnish zone limit in a workpiece manufactured by the cutting tool if a time position at which an absolute value of the first time evolution is maximal differs from a time position at which an absolute value of the one or more reference time evolutions is maximal. Such difference may be at least a predefined absolute or relative difference, for example by at least 1%, 5%, or 10%. Such deterioration may in particular be an abrasive deterioration, for example a deterioration of an edge of the male part of the die (the punch) leading to an increase in a radius characterising a deviation of said edge from a sharp edge. For example, an increase in said radius from 50 µm to 300 µm may lead to an increase in the burnish zone from 28% of the thickness of the manufactured workpiece to 69% thereof and hence to a corresponding shifting of the burnish zone limit.

The inventors of the present application realised that the extension of the burnish zone and/or the position of the burnish zone limit is directly related with the measurement at which an absolute value of the corresponding time evolution is maximal. This is assumed to be related to the fact that, in the instant immediately preceding fracturing, the material blank undergoes maximal plastic deformation during the cutting process and hence a maximal temperature level, which is measured via a corresponding maximal absolute value of the measured thermocurrent.

If for example a succession of cutting processes for manufacturing a sequence of one and the same type of workpiece is monitored using the detection module of the invention and the die is undergoing an increasing degree of abrasive deterioration, the time position at which an absolute value of the corresponding time evolution is maximal may be observed to progressively "move" to later measurement times (i.e. time positions) as deterioration increases and, consequently, the burnish zone increases in the resulting manufactured workpieces.

"Time position" may refer herein to a time coordinate of a corresponding time evolution, in particular measured from an origin corresponding to a beginning of measurements corresponding to the respective time evolution. Thus, for example, a maximal absolute value of a first time evolution expressed as I1(t) (current intensity as a function of time) may correspond to the time coordinate t=0.10 s, while the maximal absolute value of a reference time evolution expressed as Ir(t) (current intensity as a function of time) may correspond to a time coordinate t=0.08 s, meaning that the respective maxima occur at different times during the respective measuring process measured from the beginning thereof, i.e. at different times of a respective cutting process. This is irrespectively of the fact that the respective cutting processes for which the first time evolution and the reference time evolution are determined, may take place at different absolute times, for example one after the other.

The detection module of the invention may further be configured for, after detecting a type of deterioration of the die, in particular according to one or more of the previously described embodiments, generating an output, preferably a machine-readable or human-readable output, for outputting the detected type or types of deterioration.

Additionally or alternatively, the detection module of the invention may further be configured for, after detecting a type of deterioration of the die, in particular according to one or more of the previously described embodiments, generating a warning output in view of a tolerance criterion for warning a human operator that maintenance or replacement is required in the cutting tool for the corresponding tolerance criterion not to be missed. The tolerance criterion may be specific for each type of deterioration. Thus, the tolerance criterion may be one or more of: a tolerance criterion for adhesive deterioration, a tolerance criterion for abrasive deterioration, a tolerance criterion for breakout deterioration and a tolerance criterion for a deterioration causing a shifting of a burnish zone limit in a workpiece manufactured by the cutting tool.

According to preferred embodiments, the detection unit may comprise a machine learning algorithm trained on a training data set for detecting said type of deterioration of the die of the cutting tool based on the first time evolution. The training data set may comprise pairs of data elements, possibly obtained via supervised learning, a first member of each pair being a time evolution and a second member of each pair being one or more ground truth values in the form of one or more types of deterioration associated with the corresponding time evolution. The training data set may preferably comprise the one or more reference time evolutions. Thus, at least some of the pairs of the data elements of the training data set may comprise a first member corresponding to a respective one of the one or more reference time evolutions determined by the measurement module of the invention for past cutting processes. The corresponding ground truth values may be determined via human-supervision. Additionally or alternatively, the trained data set may comprise simulated time evolutions and corresponding simulated ground truth values.

A second aspect of the invention refers to a cutting tool, which may preferably be a press tool, a stamping tool, a shearing tool and/or a punching tool. The cutting tool according to the second aspect of the invention comprises a die for manufacturing a workpiece by cutting a material blank and a detection module according to the first aspect of the invention, in particular according to any of the previously discussed embodiments. The cutting tool further comprises a blank electrical contact that is adjacent to the material blank, when the material blank is being cut by the cutting tool. The blank electrical contact is arranged such that, during a cutting process, the blank electrical contact remains in electrical contact with the material blank that is being cut by the cutting tool.

In the cutting tool according to the second aspect of the invention, the detection module is configured for detecting a type of deterioration of the cutting tool, in particular of the die. The electric sensor of the detection module is electrically connected between the die and the blank electrical contact, preferably between a male part of the die or punch and the blank electrical contact. The electric sensor is configured for measuring an electric parameter of an electric current flowing between the die and the blank electrical contact when the material blank is being cut by the cutting tool. Thereby, the cutting tool according to the second aspect of the invention integrates the features and advantages of the detection module according to the first aspect of the invention.

A third aspect of the invention refers to a method of determining a deterioration of a cutting tool. The method implements the functionalities and advantages of a detection module according to the first aspect of the invention, in particular according to any of the previously described embodiments thereof. The method comprises:
- measuring a first electric parameter of a first electric current flowing between a die of the cutting tool and a material blank being cut by the cutting tool, in particular by the die of the cutting tool, during a cutting process;
- determining a first time evolution of the first electric parameter; and
- detecting a type of deterioration of the die of the cutting tool based on the first time evolution and on one or more reference time evolutions.

The method, in particular the steps of determining the first time evolution and/or of detecting the type of deterioration, may be computer-implemented. Thus, the method may be computer-implemented at least in part. For example, the method of the third aspect of the invention may be implemented by a detection module according to the first aspect of the invention and/or by a general processing unit including all connected to corresponding measuring means implementing the functionalities of the electric sensor described above.

The method may further comprise determining a detected deterioration as corresponding to one or more of an abrasive deterioration, an adhesive deterioration, a breakout deterioration of the die and a deterioration causing a shifting of a burnish zone limit of workpieces cut using the cutting tool.

The method may comprise, after detecting a type of deterioration of the die, generating an output, preferably a machine-readable or human-readable output, and outputting the detected type of deterioration.

Additionally or alternatively, the module may further comprise, after detecting a type of deterioration of the die, generating a warning output in view of a tolerance criterion for warning a human operator that maintenance or replacement is required in the cutting tool for the corresponding tolerance criterion not to be missed. The tolerance criterion may be specific for each type of deterioration. Thus, the tolerance criterion may be one or more of: a tolerance criterion for adhesive deterioration, a tolerance criterion for abrasive deterioration, a tolerance criterion for breakout deterioration and a tolerance criterion for a deterioration causing a shifting of a burnish zone limit in a workpiece manufactured by the cutting tool.

According to preferred embodiments, the method may further comprise, before measuring the first electric parameter:
- measuring, a reference electric parameter for each of one or more reference electric currents flowing between the die of the cutting tool and a corresponding material blank being cut by the cutting tool in a corresponding reference cutting process; and
- determining a reference time evolution for each of the one or more reference electric parameters ;
wherein the type of deterioration of the die of the cutting tool is detected based on the first time evolution and on one or more reference time evolutions by comparing the first time evolution with the at least one reference time evolution.

In some preferred embodiments, said type of deterioration may be detected based on time derivatives of the first time evolution and of the one or more reference time evolutions.

For example, said type of deterioration may be determined to correspond to an abrasive deterioration of the die if the time derivative of the first time evolution has greater absolute value than a time derivative of the one or more reference time evolutions.

As a further example, said type of deterioration may be determined to correspond to a breakout deterioration of the die if the time derivative of the first time evolution has a smaller absolute value than a time derivative of the one or more reference time evolutions.

In some preferred embodiments, said type of deterioration may be detected based on absolute values of the first time evolution and of the one or more reference time evolutions.

For example, said type of deterioration may be determined to correspond to an adhesive deterioration of the die if an absolute value of the first time evolution has a greater maximum than an absolute value of the one or more reference time evolutions.

In preferred embodiments, said type of deterioration may be determined to correspond to a shifting of a burnish zone limit if a time position at which an absolute value of the first time evolution is maximal differs from a time position at which an absolute value of the one or more reference time evolutions is maximal.

According to preferred embodiments, detecting said type of deterioration may comprise using a machine learning algorithm trained for detecting said type of deterioration based on the first time evolution. The machine learning algorithm and the training data set used for training the machine learning algorithm may be as described above for the first aspect of the invention.

### BRIEF DESCRIPTION OF THE DRAWINGS

- Fig. 1: shows a schematic view of a cutting tool according to the second aspect of the invention.
- Fig. 2: shows a schematic view of a detection module according to the first aspect of the invention included in the cutting tool of Fig. 1.
- Fig. 3: is a flow diagram of a method according to the third aspect of the invention implementable by the detection module of Fig. 2.
- Fig. 4: illustrates an example of a time evolution of an electric current intensity that may be associated by the detection module of Fig. 2, according to the method of Fig 3, to an abrasive deterioration of the cutting tool of Fig. 1.
- Fig. 5: illustrates an example of a time evolution of an electric current intensity that may be associated by the detection module of Fig. 2, according to the method of Fig 3, to a breakout deterioration of the cutting tool of Fig. 1.
- Fig. 6: illustrates an example of a time evolution of an electric current intensity that may be associated by the detection module of Fig. 2, according to the method of Fig 3, to an adhesive deterioration of the cutting tool of Fig. 1.
- Fig. 7: illustrates an example of a time evolution of an electric current intensity that may be associated by the detection module of Fig. 2, according to the method of Fig 3, to a deterioration of the cutting tool of Fig. 1 causing a shifting of a burnish zone limit in a workpiece manufactured by the cutting tool.
- Fig. 8: is a flow diagram of a method according to the third aspect of the invention implementable by the detection module of Fig. 2.

### DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

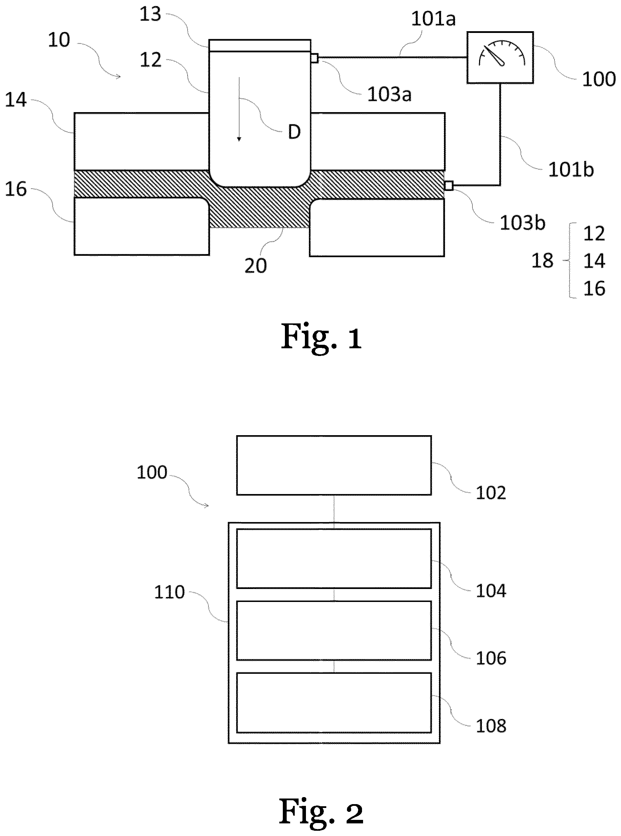

Fig. 1 shows a schematic view of a cutting tool 10 according to an embodiment of the second aspect of the invention, which comprises a detection module 100 according to the first aspect of the invention. The cutting tool 10 is configured for cutting a material blank 20 thereby manufacturing a workpiece in a cutting process. The cutting tool 10 comprises a die 18 for holding and cutting the material blank 20 during the cutting process. The die 18 comprises a movable male part or punch 12 for applying a downward cutting pressure against to the material blank 20 against the female part 16 of the die, which holds the material blank 20. The material blank 20 is also held in position from above by a holder 14 that surrounds the punch 12. During a cutting process, the material blank 20 is held in position by the female part 16 and the holder 14 and is cut due to a pressure exerted by the punch 12 by moving downwards in the direction D against the material blank 20.

In a cutting process, the pressure exerted by the punch 12 upon the material blank 20, first causes a downward plastic deformation of the material blank 20 and, eventually, a fracturing of a portion of the material blank 20 with a desired shape forming a workpiece. The shape of the workpiece can be selected by correspondingly adapting the shape of the different components of the die 18. After a first workpiece has been cut by the cutting tool 10, a new material blank 20 may be arranged in the die 18 for a subsequent cutting process in order to form a subsequent workpiece having the same shape as the first workpiece.

The die 18, including the punch 12, the holder 14 and the female part 16 can be made of a first electrically conductive material and the material blank 20 can be made of a second electrically conductive material different from the first electrically conductive material. Notably, the cutting tool 10 can be free of any electrically insulating parts attached to the punch 12, the holder 14 and the female part 16.

The detection module 100 is electrically connected between the die 18 and the material blank 20. In the embodiment shown in Fig. 1, the detection module 100 is electrically connected between the punch 12 and the material blank 20. However, in other related embodiments, the detection module 100 may be electrically connected between the material blank 20 and another part of the die 18, like the female part 16. Such electrical connection is achieved by means of a first electrical connector 103a, which is electrically connected with the detection module 100 by means of a first wired connection 101a, and by means of a second electrical connector 103b, also called blank electrical connector, which is electrically connected with the detection module 100 by means of a second wired connection 101b. The electrical connectors 103a and 103b can be configured as conventional pin contacts or plug contacts.

Fig. 2 shows a schematic detailed view of the components of the detection module 100. The detection module 100 comprises an electric sensor 102, a measuring unit 104, a detection unit 106 and an optional storage unit 108. In the exemplary embodiment shown, the electric sensor 102 is physically separated from the rest of the components of the detection module 100, i.e. from the measuring unit 104, the detection unit 106 and the storage unit 108, which are comprised as modules of an integrated processing unit 110. The integrated processing unit 110 may for example be a dedicated processing unit or a general propose processing unit, for example a computer, on which the measuring unit 104, the detection unit 106 and the storage unit 108 are implemented as executable modules. However, in other related embodiments, all components of the detection module 100 may form a single integrated unit, including the electric sensor 102.

The electric sensor 102 is electrically connected with each of the first and second electrical connectors 103a and 103b and is configured for measuring in real time an electric parameter, in particular an electric current intensity, of an electric current flowing between both electrical connectors 103a and 103b, which corresponds to an electric current flowing between the punch 12 and the blank material 20. The electric sensor 102 can comprise an amperemeter. The electric sensor 102 is connected with the processing unit 110, in particular at least with the measuring unit 104, and is configured for transmitting to the measuring unit 104 the measured values of the electric current intensity flowing between the electrical connectors 103a and 103b.

In other related embodiments, the electric parameter may for example be an electric voltage instead of an electric current intensity and the electric sensor 102 can comprise a voltmeter.

The measuring unit 104 is configured for registering an evolution in time of the electric current intensity values measured by the electric sensor 102 to determine a time evolution of the electric current intensity, i.e. to determine discrete values of a function I(t) representing electric current intensity as a function of time. The measuring unit 104 is configured for transmitting the determined time evolution of the electric current intensity to the detection unit 106.

The detection unit 106 is configured for detecting a type of deterioration of the die 18 of the cutting tool 10 based on the time evolution of the electric current intensity determined by the measuring unit 104 and on one or more reference time evolutions that are stored in the storage unit 108 and correspond to respective electric current intensities.

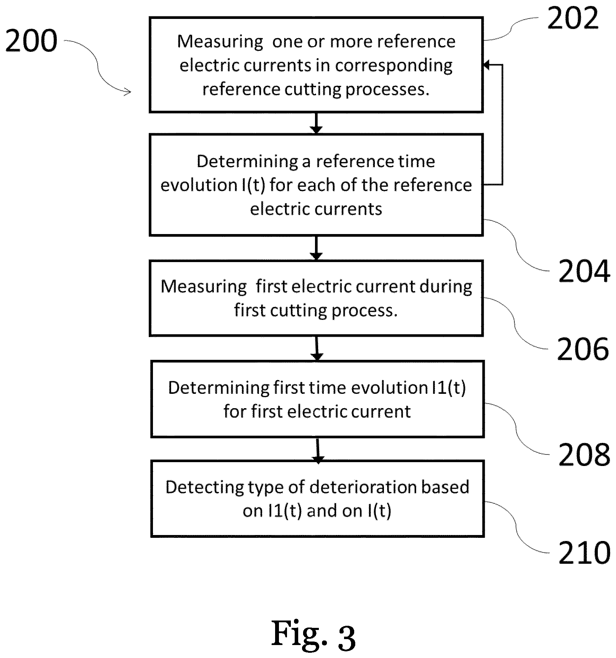

Thus, the detection module 100 is configured for implementing a method of determining a deterioration of the cutting tool 10. An exemplary embodiment of such method 200 is illustrated in Fig. 3.

According to the method 200 of Fig. 3, the cutting tool 10 is used for sequentially manufacturing a plurality of identical workpieces by corresponding cutting processes using the die 18. Steps 202 and 204 are carried out for each cutting process. Thus, for each cutting process of the cutting tool 10, a corresponding reference electric current intensity is measured by the electric sensor 102 and a corresponding reference time evolution I(t) is determined by the measuring unit 104 and stored in the storage unit 108.

In the course of a cutting process, when the die 18, in particular the punch 12, exerts pressure upon the material blank 20, the plastic deformation within the material blank 20 results in heat dissipation and hence in temperature increases within the material blank 20 and the die 18 that lead to the creation of a thermoelectric current through the die 18, the material blank 20, the wired connections 101a and 101b and the electric sensor 102 of the detection module 100 due to the Seebeck effect as per the principles explained in detail in EP 4 122 619 A1 for a forming tool. As explained therein, the die 18, for example the punch 12, and the material blank 20 can be considered as two electrical conductors in mutual contact forming a thermocouple. Notably, as the inventors of the present application noticed, different types of deformation of the material blank 20 lead to different time evolutions of the thermoelectric current, and such differences can be detected by the detection module 100.

At 206, after steps 202-204 have been carried out one or more times, a first electric current intensity of a first electric current is measured by the electric sensor 102 for a subsequent cutting process, which is referred to herein as the "first cutting process" (despite not necessarily being the very first cutting process carried out by the cutting tool 10 in the sequence).

At 208, the corresponding time evolution of the first electric current intensity, referred to herein as "first time evolution" I1(t), is determined by the measuring unit 104 and is transmitted to the detection unit 106.

Based on a comparison of the first time evolution I1(t) with the previously determined time evolutions I(t) stored in the storage unit 108, the detection unit 106 can determine whether the die 18 is suffering from deterioration and, in that case, of what type or types of deterioration.

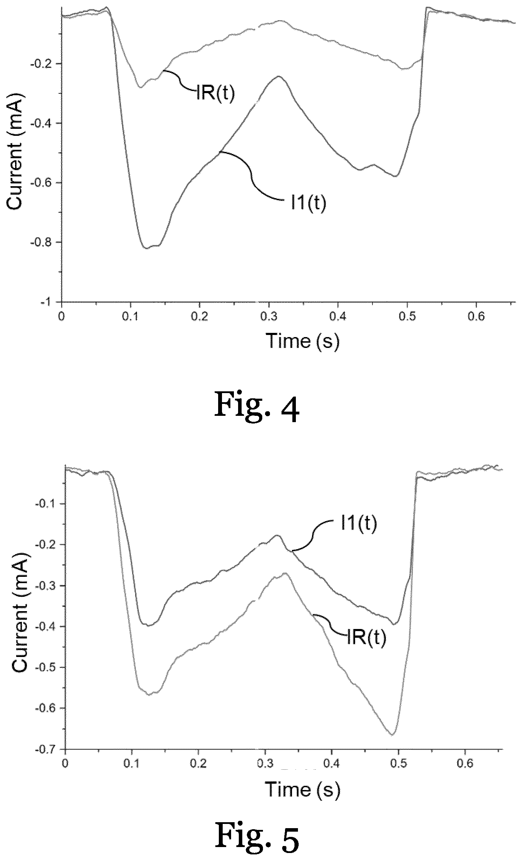

This is illustrated in Figs. 4-7 for exemplary embodiments.

Fig. 4 shows an exemplary comparison of a reference time evolution IR(t) of a reference electric current intensity measured for a reference cutting process with a first time evolution I1(t) of a first electric current intensity measured for a subsequent cutting process. Both time evolutions shown in Fig. 4 were determined based on electric currents measured for the same cutting tool 10, with a cylindrical punch made of 1.3343 HSS steel having a diameter of 15 mm and with a material blank 20 made of EN AW 5083 having a thickness of 4 mm and with a horizontal separation distance between the punch 12 and the female part 16 of the die corresponding to 1% of the thickness of the material blank 20.

As seen in Fig. 4, both IR(t) and I1(t) show a minimum peak (maximum peak if considering the absolute value of the current represented in the vertical axis) between times 0.1 s and 0.2 s corresponding to the time at which the material blank 20 fractures during the respective cutting process. Right before this extremal point and right after this extremal point, an absolute value of the time derivative of I1(t), i.e. of a slope of I1(t), is considerably greater than an absolute value of the time derivative of IR(t). This is related to more rapid temperature variations within the material of the material blank 20 and the punch 12. For the time before the extreme point corresponding to the initial fracturing of the material blank 20, the steeper slope of I1(t) is indicative of a larger area of the material blank 20 being plastically deformed by the punch 12 during the first cutting process as compared to the reference cutting process. Therefore, the detection unit 106 can be configured to determine that I1(t) corresponds to a cutting process in which the punch 12 suffers from abrasive deterioration. The abrasive deterioration can in particular correspond to a less well-defined edge of the punch 12. For example, in the cutting process corresponding to IR(t), the punch 12 had an edge with a curvature radius of 50 µm while in the cutting process corresponding to I1(t), the punch 12 had deteriorated and had an edge with a curvature radius of 300 µm. The detection unit 106 can be configured to detect an abrasive deterioration of the punch 12 if the absolute value of the time derivative of I1(t) is at least 10% greater than the absolute value of the time derivative of IR(t), in particular in the time preceding the first local extremal point.

Notably, in the example of Fig. 4, the cutting process corresponding to I1(t) needs not be a cutting process immediately preceded by the cutting process corresponding to IR(t). The detected abrasive deterioration may develop over a large number of cutting processes, letting the time evolution progressively develop from IR(t) to I1(t). I1(t) may correspond to a difference between the absolute values of the time derivatives of I1(t) and IR(t) that exceeds for a first time a predefined threshold specifically defined as a tolerance for abrasive deterioration. The detection module 100 may then generate an output to inform an operator of the cutting tool 10 that the punch 12 needs replacement or repair due to abrasive deterioration.

Fig. 5 shows an exemplary comparison of a reference time evolution IR(t) of a reference electric current intensity measured for a reference cutting process with a first time evolution I1(t) of a first electric current intensity measured for a subsequent cutting process. Both time evolutions shown in Fig. 5 were determined based on electric currents measured for the same cutting tool 10, with a cylindrical punch made of 1.3343 HSS steel having a diameter of 15 mm and with a material blank 20 made of 1.4301 HSS steel having a thickness of 4 mm and with a horizontal separation distance between the punch 12 and the female part 16 of the die corresponding to 1% of the thickness of the material blank 20.

As seen in Fig. 5, both IR(t) and I1(t) show a minimum peak (maximum peak if considering the absolute value of the current represented in the vertical axis) between times 0.1 s and 0.2 s corresponding to the time at which the material blank 20 fractures during the respective cutting process. Right before this extremal point, an absolute value of the time derivative of I1(t) is smaller than an absolute value of the time derivative of IR(t). This is related to slower temperature variations within the material of the material blank 20 and the punch 12. For the time before the extreme point corresponding to the initial fracturing of the material blank 20, the less pronounced slope of I1(t) is indicative of a smaller area of the material blank 20 being plastically deformed by the punch during the first cutting process as compared to the reference cutting process. Therefore, the detection unit 106 can be configured to determine that I1(t) corresponds to a cutting process in which the punch 12 suffers from breakout deterioration. The abrasive deterioration can in particular correspond to a piece of the punch 12 that was in contact with the material blank 20 in the cutting process corresponding to IR(t) being missing in the cutting process corresponding to I1(t). The detection unit 106 can be configured to detect a breakout deterioration of the punch 12 if the absolute value of the time derivative of I1(t) is at least 10% smaller than the absolute value of the time derivative of IR(t), in particular in the time preceding the first local extremal point.

Notably, in the example of Fig. 5, the cutting process corresponding to I1(t) may be a cutting process immediately preceded by the cutting process corresponding to IR(t), since a breakout may occur suddenly rather than progressively. I1(t) may correspond to a difference between the absolute values of the time derivatives of I1(t) and IR(t) that suddenly exceeds a predefined threshold specifically defined as a tolerance for breakout deterioration. The detection module 100 may then generate an output to inform an operator of the cutting tool 10 that the punch 12 needs replacement or repair due to breakout deterioration.

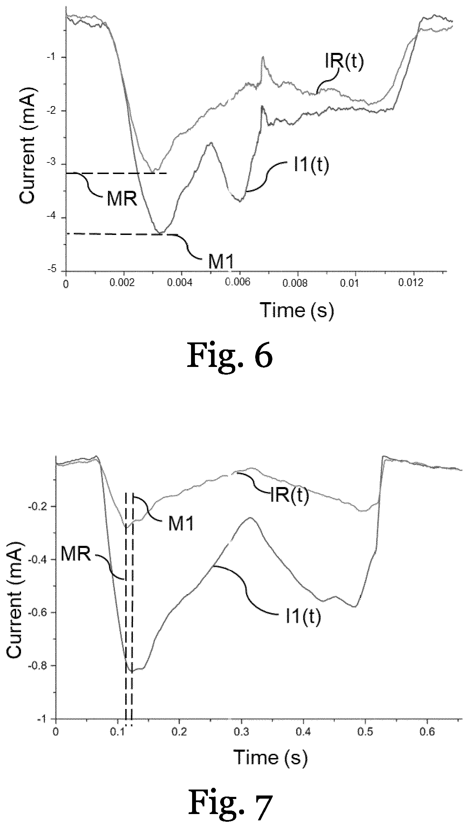

Fig. 6 shows an exemplary comparison of a reference time evolution IR(t) of a reference electric current measured for a reference cutting process with a first time evolution I1(t) of a first electric current measured for a subsequent cutting process. Both time evolutions shown in Fig. 6 were determined based on electric currents measured for the same cutting tool 10, with a cylindrical punch made of CF-H40S+ metal having a diameter of 15 mm and with a material blank 20 made of EN AW 5754 steel having a thickness of 2.5 mm and with a horizontal separation distance between the punch 12 and the female part 16 of the die corresponding to 5% of the thickness of the material blank 20.

As seen in Fig. 6, both IR(t) and I1(t) show a minimum peak (maximum peak if considering the absolute value of the current represented in the vertical axis) between times 0.002 s and 0.004 s corresponding to the time at which the material blank 20 fractures during the respective cutting process. Right before this extremal point, the absolute values of the time derivatives of I1(t) and of IR(t) are very similar. However, the current value of the peak of I1(t) (see line M1 in Fig. 5) has a greater absolute value than the current value of the peak of IR(t) (see line MR in Fig. 5). This is related to an overall greater heat dissipation in the cutting process corresponding to I1(t) as compared to the cutting process corresponding to IR(t) caused by microscale weld deposits formed on the lateral surface of the punch 12 over time. Therefore, the detection unit 106 can be configured to determine that I1(t) corresponds to a cutting process in which the punch 12 suffers from adhesive deterioration. The detection unit 106 can be configured to detect an adhesive deterioration of the punch 12 if the maximal absolute value of I1(t) is at least 10% greater than the maximal absolute value of IR(t), in particular at a time position corresponding to the first local extremal point and, preferably, with the absolute value of the time derivative of I1(t) not exceeding the absolute value of the time derivative of IR(t) by more than 30% in the time preceding the peak.

Notably, in the example of Fig. 6, the cutting process corresponding to I1(t) needs not be a cutting process immediately preceded by the cutting process corresponding to IR(t). The detected adhesive deterioration may develop over a large number of cutting processes, letting the time evolution progressively develop from IR(t) to I1(t). I1(t) may correspond to a difference between the maxima of the absolute values of I1(t) and IR(t) that exceeds for a first time a predefined threshold specifically defined as a tolerance for adhesive deterioration. The detection module 100 may then generate an output to inform an operator of the cutting tool 10 that the punch 12 needs replacement or repair due to adhesive deterioration.

Fig. 7 shows an exemplary comparison of a reference time evolution IR(t) of a reference electric current intensity measured for a reference cutting process with a first time evolution I1(t) of a first electric current intensity measured for a subsequent cutting process. Both time evolutions shown in Fig. 7 were determined based on electric currents measured for the same cutting tool 10, with a cylindrical punch made of 1.3343 HSS steel having a diameter of 15 mm and with a material blank made 20 of EN AW 5083 having a thickness of 4 mm and with a horizontal separation distance between the punch 12 and the female part 16 of the die corresponding to 1% of the thickness of the material blank 20.

As seen in Fig. 7, both IR(t) and I1(t) show a minimum peak (maximum peak if considering the absolute value of the current represented in the vertical axis) between times 0.1 s and 0.2 s corresponding to the time at which the material blank 20 fractures during the respective cutting process. However, the peak of I1(t), indicated by the dashed line M1, occurs later during the cutting process than the peak of IR(t), indicated by the line MR. This is indicative of fracturing beginning later during the cutting process and means that in the cutting process corresponding to I1(t), plastic deformation previous to fracture occurs during a longer time. Looking at the resulting workpiece, it will be possible to see a larger burnish zone in the workpiece manufactured with the cutting process corresponding to I1(t) as compared to the workpiece manufactured with the cutting process corresponding to IR(t). Therefore, the detection unit 106 can be configured to determine that I1(t) corresponds to a cutting process in which the punch 12 suffers from a deterioration that causes a shifting in the burnish zone limit in the resulting workpiece. The deterioration can in particular correspond to the same deterioration that is detectable for Fig. 1, i.e. to a less well-defined edge of the punch 12. For example, in the cutting process corresponding to IR(t), the punch 12 had an edge with a curvature radius of 50 µm while in the cutting process corresponding to I1(t), the punch 12 had deteriorated and had an edge with a curvature radius of 300 µm. This difference may cause the burnish zone of the resulting workpiece to shift from 28% of the thickness of the manufactured workpiece to 69% thereof and hence to a corresponding shifting of the burnish zone limit. The detection unit 106 can be configured to detect a deterioration of the punch 12 causing a shifting in the burnish zone limit in the resulting workpiece if the time-positions at which the maximal absolute value of I1(t) and IR(t) occur differ by more than 1%.

Notably, in the example of Fig. 7, the cutting process corresponding to I1(t) needs not be a cutting process immediately preceded by the cutting process corresponding to IR(t). The detected abrasive deterioration may develop over a large number of cutting processes, letting the time evolution progressively develop from IR(t) to I1(t). I1(t) may correspond to a difference between time positions at which the maximal absolute value of I1(t) and IR(t) occur that exceeds for a first time a predefined threshold specifically defined as a tolerance for this type of deterioration. The detection module 106 may then generate an output to inform an operator of the cutting tool that the punch 12 needs replacement or repair due to this type of deterioration.

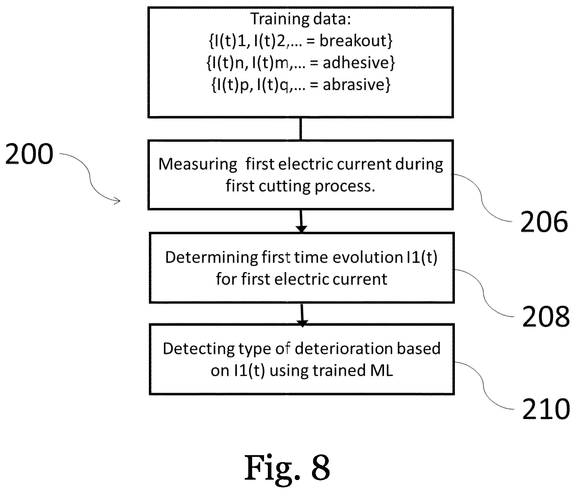

Fig. 8 is a flow diagram of a method of determining a deterioration of the cutting tool 10 according to a further embodiment of the invention. In contrast to the method illustrated in Fig. 3, the method 200 of Fig. 8 needs not include steps 202 and 204. The references for determining different types of deterioration of the die 18 are instead provided in the form of training data, for example in the course of a supervised learning process. Over a number of cutting processes, a corresponding time evolution of the electric parameter measured by the electric sensor 102 is associated to a ground truth value, e.g. "breakout" or "adhesive" or "abrasive". As a consequence, a training data set including a plurality of pairs of values of the type {I(t)1, breakout}, {I(t)2, breakout}, ..., {I(t)n, adhesive}, ... , {I(t)m, adhesive}, {I(t)p, abrasive}, ..., {I(t)q, abrasive} is obtained and used to train a machine learning algorithm that learns to receive a time evolution determined by the measuring unit 104 of the detection module 100 and to infer from it a type of deterioration. The machine learning algorithm can be contained in the detection unit 106, which is then configured to detect, at 210, the type of deterioration of the die 18 of the cutting tool 10.

Thus, in the method 200 of Fig. 8, steps 206 and 208 are carried out as for the method 200 of Fig. 3. Then, in step 210, the detection unit 106 uses the trained machine learning algorithm to detect the type of deterioration of the die 18 of the cutting tool 10.

Notably, it is possible to obtain the training data as measurement data by repeatedly carrying out steps 202 and 204 of the method of Fig. 3 and by incorporating to each time evolution a corresponding ground truth value or label, for example in a supervised learning process.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that lie within the scope of protection of the invention as defined in the claims.

## Claims

1. A detection module (100) for characterising a deterioration of a cutting tool (10), the detection module (100) comprising:
an electric sensor (102) configured for measuring an electric parameter of an electric current flowing between a die (18) of the cutting tool and a material blank (20) during a cutting process for cutting the material blank (20) by the cutting tool (10) using the die (18);
a measuring unit (104) configured for determining a first time evolution of a first electric parameter measured by the electric sensor (102); and
the detection module **characterized in that** it further comprises:
a detection unit (106) configured for detecting a type of deterioration of the die (18) of the cutting tool (100) based on the first time evolution and on one or more reference time evolutions.

2. The detection module of claim 1, wherein the measuring unit (104) is further configured for determining, before determining the first time evolution, the one or more reference time evolutions for one or more corresponding reference electric parameters of corresponding reference electric currents measured by the electric sensor (102) during respective one or more cutting processes for cutting a respective material blank (20) by the cutting tool (10) using the die (18); and
wherein the detection unit (106) is configured for detecting said type of deterioration of the die (18) of the cutting tool (10) based on a comparison of the first time evolution with the at least one reference time evolution.

3. The detection module of claim 1 or 2, wherein the detection unit (106) is configured for detecting said type of deterioration of the die (18) based on time derivatives of the first time evolution and of the one or more reference time evolutions.

4. The detection module of claim 3, wherein the detection unit (106) is configured for determining that said type of deterioration corresponds to an abrasive deterioration of the die (18) if the time derivative of the first time evolution has greater absolute value than a time derivative of the one or more reference time evolutions; and/or
wherein the detection unit (106) is preferably configured for determining that said type of deterioration corresponds to a breakout deterioration of the die (18) if the time derivative of the first time evolution has smaller absolute value than a time derivative of the one or more reference time evolutions.

5. The detection module of any of the preceding claims, wherein the detection unit (106) is configured for detecting said type of deterioration of the die (18) based on absolute values of the first time evolution and of the one or more reference time evolutions;

6. The detection module of claim 5, wherein the detection unit (106) is configured for determining that said type of deterioration corresponds to an adhesive deterioration of the die (18) if an absolute value of the first time evolution has a greater maximum than an absolute value of the one or more reference time evolutions.

7. The detection module of any of the preceding claims, wherein the detection unit (106) is configured for determining that said type of deterioration corresponds to a deterioration causing a shifting of a burnish zone limit in a workpiece manufactured by the cutting tool if a time position at which an absolute value of the first time evolution is maximal differs from a time position at which an absolute value of the one or more reference time evolutions is maximal.

8. The detection module of any of the preceding claims, wherein the detection unit (106) comprises a machine learning algorithm trained on a training data set, preferably comprising the one or more reference time evolutions, for detecting said type of deterioration of the die (18) of the cutting tool (10) based on the first time evolution.

9. A cutting tool (10) comprising:
a die (18) for manufacturing a workpiece by cutting a material blank (20),
a blank electrical contact (103) adjacent to a material blank (20), when the material blank (20) is being cut by the cutting tool (10), and
a detection module (100) according to any of the preceding claims,
wherein the electric sensor (102) of the detection module (100) is electrically connected between the die (18) and the blank electrical contact (103), wherein the electric sensor (102) is configured for measuring an electric parameter of an electric current flowing between the die (18) and the blank electrical contact (103), when the material blank (20) is being cut by the cutting tool (10); and
wherein the detection module (10) is configured for detecting a type of deterioration of the die (18).

10. A method (200) of determining a deterioration of a cutting tool (10), the method comprising:
measuring (206) a first electric parameter of a first electric current flowing between a die (18) of the cutting tool (10) and a material blank (20) being cut by the cutting tool during a cutting process;
determining (208) a first time evolution of the first electric parameter; and
the method **characterized in that** it further comprises the step of
detecting (210) a type of deterioration of the die (18) of the cutting tool (10) based on the first time evolution and on one or more reference time evolutions.

11. The method of claim 10, further comprising, before measuring (206) the first electric parameter:
measuring (202) a reference electric parameter for each of one or more reference electric currents flowing between the die (18) of the cutting tool (10) and a material blank (20) being cut by the cutting tool in a corresponding reference cutting process;
determining (204) a reference time evolution for each of the reference electric parameters; and
wherein the type of deterioration of the die (18) of the cutting tool (10) is detected (210) based on the first time evolution and on one or more reference time evolutions by comparing the first time evolution with the at least one reference time evolution.

12. The method of any claim 10 or 11, wherein said type of deterioration is detected based on time derivatives of the first time evolution and of the one or more reference time evolutions;
wherein said type of deterioration is preferably determined to correspond to an abrasive deterioration of the die (18) if the time derivative of the first time evolution has greater absolute value than a time derivative of the one or more reference time evolutions; and/or
wherein said type of deterioration is preferably determined to correspond to a breakout deterioration of the die (18) if the time derivative of the first time evolution has a smaller absolute value than a time derivative of the one or more reference time evolutions.

13. The method of any of claims 10 to 12, wherein said type of deterioration is detected based on absolute values of the first time evolution and of the one or more reference time evolutions;
wherein said type of deterioration preferably is determined to correspond to an adhesive deterioration of the die (18) if an absolute value of the first time evolution has a greater maximum than an absolute value of the one or more reference time evolutions.

14. The method of any of claims 10 to 13, wherein said type of deterioration is determined to correspond to a deterioration causing a shifting of a burnish zone limit in a workpiece manufactured by the cutting tool if a time position at which an absolute value of the first time evolution is maximal differs from a time position at which an absolute value of the one or more reference time evolutions is maximal.

15. The method of any of claims 10 to 14, wherein the detecting (210) said type of deterioration comprises using a machine learning algorithm trained for detecting said type of deterioration of the die of the cutting tool based on the first time evolution, wherein the machine learning algorithm is trained using a training data set comprising a plurality of said reference time evolutions associated with respective ground truth values.

## Patentansprüche

1. Detektionsmodul (100) zum Charakterisieren einer Verschlechterung eines Schneidwerkzeugs (10), wobei das Detektionsmodul (100) Folgendes umfasst:
einen elektrischen Sensor (102), der zum Messen eines elektrischen Parameters eines elektrischen Stroms konfiguriert ist, der zwischen einer Matrize (18) des Schneidwerkzeugs und einem Materialrohling (20) während eines Schneidprozesses zum Schneiden des Materialrohlings (20) durch das Schneidwerkzeug (10) unter Verwendung der Matrize (18) fließt;
eine Messeinheit (104), die zum Bestimmen einer ersten Zeitentwicklung eines ersten elektrischen Parameters konfiguriert ist, der durch den elektrischen Sensor (102) gemessen wird; und
wobei das Detektionsmodul **dadurch gekennzeichnet ist, dass** es ferner eine Detektionseinheit (106) aufweist, die zum Detektieren einer Art von Verschlechterung der Matrize (18) des Schneidwerkzeugs (100) basierend auf der ersten Zeitentwicklung und auf einer oder mehreren Referenzzeitentwicklungen konfiguriert ist.

2. Detektionsmodul nach Anspruch 1, wobei die Messeinheit (104) ferner zum Bestimmen, vor dem Bestimmen der ersten Zeitentwicklung, der einen oder mehreren Referenzzeitentwicklungen für einen oder mehrere entsprechende elektrische Referenzparameter von entsprechenden elektrischen Referenzströmen konfiguriert ist, die durch den elektrischen Sensor (102) während eines jeweiligen einen oder mehrerer Schneidprozesse zum Schneiden eines jeweiligen Materialrohlings (20) durch das Schneidwerkzeug (10) unter Verwendung der Matrize (18) gemessen werden; und
wobei die Detektionseinheit (106) zum Detektieren der Art von Verschlechterung der Matrize (18) des Schneidwerkzeugs (10) basierend auf einem Vergleich der ersten Zeitentwicklung mit der mindestens einen Referenzzeitentwicklung konfiguriert ist.

3. Detektionsmodul nach Anspruch 1 oder 2, wobei die Detektionseinheit (106) zum Detektieren der Art von Verschlechterung der Matrize (18) basierend auf Zeitableitungen der ersten Zeitentwicklung und der einen oder mehreren Referenzzeitentwicklungen konfiguriert ist.

4. Detektionsmodul nach Anspruch 3, wobei die Detektionseinheit (106) zum Bestimmen konfiguriert ist, dass die Art von Verschlechterung einer abrasiven Verschlechterung der Matrize (18) entspricht, wenn die Zeitableitung der ersten Zeitentwicklung einen größeren Absolutwert als eine Zeitableitung der einen oder mehreren Referenzzeitentwicklungen aufweist; und/oder
wobei die Detektionseinheit (106) vorzugsweise zum Bestimmen konfiguriert ist, dass die Art von Verschlechterung einer Durchbruchverschlechterung der Matrize (18) entspricht, wenn die Zeitableitung der ersten Zeitentwicklung einen kleineren Absolutwert als eine Zeitableitung der einen oder mehreren Referenzzeitentwicklungen aufweist.

5. Detektionsmodul nach einem der vorhergehenden Ansprüche, wobei die Detektionseinheit (106) zum Detektieren der Art von Verschlechterung der Matrize (18) basierend auf Absolutwerten der ersten Zeitentwicklung und der einen oder mehreren Referenzzeitentwicklungen konfiguriert ist.

6. Detektionsmodul nach Anspruch 5, wobei die Detektionseinheit (106) zum Bestimmen konfiguriert ist, dass die Art von Verschlechterung einer adhäsiven Verschlechterung der Matrize (18) entspricht, wenn ein Absolutwert der ersten Zeitentwicklung ein größeres Maximum als ein Absolutwert der einen oder mehreren Referenzzeitentwicklungen aufweist.

7. Detektionsmodul nach einem der vorhergehenden Ansprüche, wobei die Detektionseinheit (106) zum Bestimmen konfiguriert ist, dass die Art von Verschlechterung einer Verschlechterung entspricht, die eine Verschiebung einer Schleifzonengrenze in einem durch das Schneidwerkzeug hergestellten Werkstück verursacht, wenn eine Zeitposition, an der ein Absolutwert der ersten Zeitentwicklung maximal ist, sich von einer Zeitposition unterscheidet, an der ein Absolutwert der einen oder mehreren Referenzzeitentwicklungen maximal ist.

8. Detektionsmodul nach einem der vorhergehenden Ansprüche, wobei die Detektionseinheit (106) einen Maschinenlernalgorithmus umfasst, der auf einen Trainingsdatensatz trainiert ist, der vorzugsweise die eine oder mehreren Referenzzeitentwicklungen umfasst, zum Detektieren der Art von Verschlechterung der Matrize (18) des Schneidwerkzeugs (10) basierend auf der ersten Zeitentwicklung.

9. Schneidwerkzeug (10), das Folgendes umfasst:
eine Matrize (18) zum Herstellen eines Werkstücks durch Schneiden eines Materialrohlings (20),
einen elektrischen Rohlingkontakt (103) neben einem Materialrohling (20), wenn der Materialrohling (20) durch das Schneidwerkzeug (10) geschnitten wird, und
ein Detektionsmodul (100) nach einem der vorhergehenden Ansprüche,
wobei der elektrische Sensor (102) des Detektionsmoduls (100) elektrisch zwischen die Matrize (18) und den elektrischen Rohlingkontakt (103) geschaltet ist, wobei der elektrische Sensor (102) zum Messen eines elektrischen Parameters eines elektrischen Stroms konfiguriert ist, der zwischen der Matrize (18) und dem elektrischen Rohlingkontakt (103) fließt, wenn der Materialrohling (20) durch das Schneidwerkzeug (10) geschnitten wird; und
wobei das Detektionsmodul (10) zum Detektieren einer Art von Verschlechterung der Matrize (18) konfiguriert ist.

10. Verfahren (200) zum Bestimmen einer Verschlechterung eines Schneidwerkzeugs (10), wobei das Verfahren Folgendes umfasst:
Messen (206) eines ersten elektrischen Parameters eines ersten elektrischen Stroms, der zwischen einer Matrize (18) des Schneidwerkzeugs (10) und einem Materialrohling (20) fließt, der durch das Schneidwerkzeug während eines Schneidprozesses geschnitten wird;
Bestimmen (208) einer ersten Zeitentwicklung des ersten elektrischen Parameters; und
wobei das Verfahren **dadurch gekennzeichnet ist, dass** es ferner Detektieren (210) einer Art von Verschlechterung der Matrize (18) des Schneidwerkzeugs (10) basierend auf der ersten Zeitentwicklung und auf einer oder mehreren Referenzzeitentwicklungen umfasst.

11. Verfahren nach Anspruch 10, das ferner vor dem Messen (206) des ersten elektrischen Parameters Folgendes umfasst:
Messen (202) eines elektrischen Referenzparameters für jeden von einem oder mehreren elektrischen Referenzströmen, die zwischen der Matrize (18) des Schneidwerkzeugs (10) und einem Materialrohling (20) fließen, der durch das Schneidwerkzeug in einem entsprechenden Referenzschneidprozess geschnitten wird;
Bestimmen (204) einer Referenzzeitentwicklung für jeden der elektrischen Referenzparameter; und
wobei die Art von Verschlechterung der Matrize (18) des Schneidwerkzeugs (10) basierend auf der ersten Zeitentwicklung und auf einer oder mehreren Referenzzeitentwicklungen durch Vergleichen der ersten Zeitentwicklung mit der mindestens einen Referenzzeitentwicklung detektiert (210) wird.

12. Verfahren nach Anspruch 10 oder 11, wobei die Art von Verschlechterung basierend auf Zeitableitungen der ersten Zeitentwicklung und der einen oder mehreren Referenzzeitentwicklungen detektiert wird;
wobei die Art von Verschlechterung vorzugsweise als einer abrasiven Verschlechterung der Matrize (18) entsprechend bestimmt wird, wenn die Zeitableitung der ersten Zeitentwicklung einen größeren Absolutwert als eine Zeitableitung der einen oder mehreren Referenzzeitentwicklungen aufweist; und/oder
wobei die Art von Verschlechterung vorzugsweise als einer Durchbruchverschlechterung der Matrize (18) entsprechend bestimmt wird, wenn die Zeitableitung der ersten Zeitentwicklung einen kleineren Absolutwert als eine Zeitableitung der einen oder mehreren Referenzzeitentwicklungen aufweist.

13. Verfahren nach einem der Ansprüche 10 bis 12, wobei die Art von Verschlechterung basierend auf Absolutwerten der ersten Zeitentwicklung und der einen oder mehreren Referenzzeitentwicklungen detektiert wird;
wobei die Art von Verschlechterung vorzugsweise als einer adhäsiven Verschlechterung der Matrize (18) entsprechend bestimmt wird, wenn ein Absolutwert der ersten Zeitentwicklung ein größeres Maximum als ein Absolutwert der einen oder mehreren Referenzzeitentwicklungen aufweist.

14. Verfahren nach einem der Ansprüche 10 bis 13, wobei die Art von Verschlechterung als einer Verschlechterung entsprechend bestimmt wird, die eine Verschiebung einer Schleifzonengrenze in einem durch das Schneidwerkzeug hergestellten Werkstück verursacht, wenn eine Zeitposition, an der ein Absolutwert der ersten Zeitentwicklung maximal ist, sich von einer Zeitposition unterscheidet, an der ein Absolutwert der einen oder mehreren Referenzzeitentwicklungen maximal ist.

15. Verfahren nach einem der Ansprüche 10 bis 14, wobei das Detektieren (210) der Art von Verschlechterung das Verwenden eines Maschinenlernalgorithmus umfasst, der zum Detektieren der Art von Verschlechterung der Matrize des Schneidwerkzeugs basierend auf der ersten Zeitentwicklung trainiert ist, wobei der Maschinenlernalgorithmus unter Verwendung eines Trainingsdatensatzes trainiert ist, der eine Vielzahl der Referenzzeitentwicklungen umfasst, die jeweiligen Ground-Truth-Werten zugeordnet sind.

## Revendications

1. Module de détection (100) pour caractériser une détérioration d'un outil de coupe (10), le module de détection (100) comprenant :
un capteur électrique (102) configuré pour mesurer un paramètre électrique d'un courant électrique circulant entre une matrice (18) de l'outil de coupe et une ébauche de matériau (20) pendant un processus de coupe pour couper l'ébauche de matériau (20) par l'outil de coupe (10) en utilisant la matrice (18) ;
une unité de mesure (104) configurée pour déterminer une première évolution temporelle d'un premier paramètre électrique mesuré par le capteur électrique (102) ; et
une unité de détection (106) configurée pour détecter un type de détérioration de la matrice (18) de l'outil de coupe (100) sur la base de la première évolution temporelle et d'une ou plusieurs évolutions temporelles de référence.

2. Module de détection selon la revendication 1, dans lequel l'unité de mesure (104) est en outre configurée pour déterminer, avant de déterminer la première évolution temporelle, les une ou plusieurs évolutions temporelles de référence pour un ou plusieurs paramètres électriques de référence correspondants de courants électriques de référence correspondants mesurés par le capteur électrique (102) pendant un ou plusieurs processus de coupe respectifs pour couper une ébauche de matériau (20) respective par l'outil de coupe (10) en utilisant la matrice (18) ; et
dans lequel l'unité de détection (106) est configurée pour détecter ledit type de détérioration de la matrice (18) de l'outil de coupe (10) sur la base d'une comparaison de la première évolution temporelle avec l'au moins une évolution temporelle de référence.

3. Module de détection selon la revendication 1 ou 2, dans lequel l'unité de détection (106) est configurée pour détecter ledit type de détérioration de la matrice (18) sur la base de dérivées temporelles de la première évolution temporelle et des une ou plusieurs évolutions temporelles de référence.

4. Module de détection selon la revendication 3, dans lequel l'unité de détection (106) est configurée pour déterminer que ledit type de détérioration correspond à une détérioration abrasive de la matrice (18) si la dérivée temporelle de la première évolution temporelle a une valeur absolue supérieure à une dérivée temporelle des une ou plusieurs évolutions temporelles de référence ; et/ou
dans lequel l'unité de détection (106) est de préférence configurée pour déterminer que ledit type de détérioration correspond à une détérioration par rupture de la matrice (18) si la dérivée temporelle de la première évolution temporelle a une valeur absolue inférieure à une dérivée temporelle des une ou plusieurs évolutions temporelles de référence.

5. Module de détection selon l'une quelconque des revendications précédentes, dans lequel l'unité de détection (106) est configurée pour détecter ledit type de détérioration de la matrice (18) sur la base de valeurs absolues de la première évolution temporelle et des une ou plusieurs évolutions temporelles de référence.

6. Module de détection selon la revendication 5, dans lequel l'unité de détection (106) est configurée pour déterminer que ledit type de détérioration correspond à une détérioration adhésive de la matrice (18) si une valeur absolue de la première évolution temporelle a un maximum supérieur à une valeur absolue des une ou plusieurs évolutions temporelles de référence.

7. Module de détection selon l'une quelconque des revendications précédentes, dans lequel l'unité de détection (106) est configurée pour déterminer que ledit type de détérioration correspond à une détérioration provoquant un décalage d'une limite de zone de rodage dans une pièce fabriquée par l'outil de coupe si une position temporelle à laquelle une valeur absolue de la première évolution temporelle est maximale diffère d'une position temporelle à laquelle une valeur absolue des une ou plusieurs évolutions temporelles de référence est maximale.

8. Module de détection selon l'une quelconque des revendications précédentes, dans lequel l'unité de détection (106) comprend un algorithme d'apprentissage machine entraîné sur un ensemble de données d'entraînement, comprenant de préférence les une ou plusieurs évolutions temporelles de référence, pour détecter ledit type de détérioration de la matrice (18) de l'outil de coupe (10) sur la base de la première évolution temporelle.

9. Outil de coupe (10) comprenant :
une matrice (18) pour fabriquer une pièce en coupant une ébauche de matériau (20),
un contact électrique d'ébauche (103) adjacent à une ébauche de matériau (20), lorsque l'ébauche de matériau (20) est en train d'être coupée par l'outil de coupe (10), et
un module de détection (100) selon l'une quelconque des revendications précédentes,
dans lequel le capteur électrique (102) du module de détection (100) est connecté électriquement entre la matrice (18) et le contact électrique d'ébauche (103), dans lequel le capteur électrique (102) est configuré pour mesurer un paramètre électrique d'un courant électrique circulant entre la matrice (18) et le contact électrique d'ébauche (103), lorsque l'ébauche de matériau (20) est en train d'être coupée par l'outil de coupe (10) ; et
dans lequel le module de détection (10) est configuré pour détecter un type de détérioration de la matrice (18).

10. Procédé (200) de détermination d'une détérioration d'un outil de coupe (10), le procédé comprenant :
la mesure (206) d'un premier paramètre électrique d'un premier courant électrique circulant entre une matrice (18) de l'outil de coupe (10) et une ébauche de matériau (20) en train d'être coupée par l'outil de coupe pendant un processus de coupe ;
la détermination (208) d'une première évolution temporelle du premier paramètre électrique ; et
la détection (210) d'un type de détérioration de la matrice (18) de l'outil de coupe (10) sur la base de la première évolution temporelle et d'une ou plusieurs évolutions temporelles de référence.

11. Procédé selon la revendication 10, comprenant en outre, avant la mesure (206) du premier paramètre électrique :
la mesure (202) d'un paramètre électrique de référence pour chacun d'un ou plusieurs courants électriques de référence circulant entre la matrice (18) de l'outil de coupe (10) et une ébauche de matériau (20) en train d'être coupée par l'outil de coupe dans un processus de coupe de référence correspondant ;
la détermination (204) d'une évolution temporelle de référence pour chacun des paramètres électriques de référence ; et
dans lequel le type de détérioration de la matrice (18) de l'outil de coupe (10) est détecté (210) sur la base de la première évolution temporelle et d'une ou plusieurs évolutions temporelles de référence en comparant la première évolution temporelle avec l'au moins une évolution temporelle de référence.

12. Procédé selon l'une quelconque des revendications 10 ou 11, dans lequel ledit type de détérioration est détecté sur la base de dérivées temporelles de la première évolution temporelle et des une ou plusieurs évolutions temporelles de référence ;
dans lequel ledit type de détérioration est de préférence déterminé pour correspondre à une détérioration abrasive de la matrice (18) si la dérivée temporelle de la première évolution temporelle a une valeur absolue supérieure à une dérivée temporelle des une ou plusieurs évolutions temporelles de référence ; et/ou
dans lequel ledit type de détérioration est de préférence déterminé pour correspondre à une détérioration par rupture de la matrice (18) si la dérivée temporelle de la première évolution temporelle a une valeur absolue inférieure à une dérivée temporelle des une ou plusieurs évolutions temporelles de référence.

13. Procédé selon l'une quelconque des revendications 10 à 12, dans lequel ledit type de détérioration est détecté sur la base de valeurs absolues de la première évolution temporelle et des une ou plusieurs évolutions temporelles de référence ;
dans lequel ledit type de détérioration est de préférence déterminé pour correspondre à une détérioration adhésive de la matrice (18) si une valeur absolue de la première évolution temporelle a un maximum supérieur à une valeur absolue des une ou plusieurs évolutions temporelles de référence.

14. Procédé selon l'une quelconque des revendications 10 à 13, dans lequel ledit type de détérioration est déterminé pour correspondre à une détérioration provoquant un décalage d'une limite de zone de rodage dans une pièce fabriquée par l'outil de coupe si une position temporelle à laquelle une valeur absolue de la première évolution temporelle est maximale diffère d'une position temporelle à laquelle une valeur absolue des une ou plusieurs évolutions temporelles de référence est maximale.

15. Procédé selon l'une quelconque des revendications 10 à 14, dans lequel la détection (210) dudit type de détérioration comprend l'utilisation d'un algorithme d'apprentissage machine entraîné pour détecter ledit type de détérioration de la matrice de l'outil de coupe sur la base de la première évolution temporelle, dans lequel l'algorithme d'apprentissage machine est entraîné en utilisant un ensemble de données d'entraînement comprenant une pluralité desdites évolutions temporelles de référence associées à des valeurs de vérité de terrain respectives.
